Europäisches Patentamt

European Patent Office

Office européen des brevets

(19)

(11) Veröffentlichungsnummer: **0 066 790**
**B1**

(12) # EUROPÄISCHE PATENTSCHRIFT

(45) Veröffentlichungstag der Patentschrift:
21.08.85

(51) Int. Cl.⁴: **B 01 D 3/12**

(21) Anmeldenummer: **82104623.2**

(22) Anmeldetag: **27.05.82**

(54) **Verfahren und Vorrichtung zur Kurzweg-Destillation.**

(30) Priorität: **06.06.81 DE 3122652**

(43) Veröffentlichungstag der Anmeldung:
**15.12.82 Patentblatt 82/50**

(45) Bekanntmachung des Hinweises auf die Patenterteilung:
**21.08.85 Patentblatt 85/34**

(84) Benannte Vertragsstaaten:
**BE CH FR GB IT LI LU NL SE**

(56) Entgegenhaltungen:
**BE - A - 511 784**
**DE - A - 2 543 327**
**FR - A - 845 957**
**FR - A - 1 245 284**
**GB - A - 457 120**
**GB - A - 458 118**
**US - A - 2 447 746**
**US - A - 2 514 944**
**US - A - 3 434 935**

(73) Patentinhaber: **Leybold-Heraeus GmbH, Bonner Strasse 504 Postfach 51 07 60, D-5000 Köln 51 (DE)**

(72) Erfinder: **Fauser, Friedrich, Spessartstrasse 19, D-6451 Hammersbach (DE)**
Erfinder: **Fischer, Willi, Kleine Rathausgasse 3, D-6453 Seligenstadt (DE)**

(74) Vertreter: **Leineweber, Jürgen, Dipl.-Phys., Am Heidstamm 78 a, D-5000 Köln 40 (DE)**

## Beschreibung

Die Erfindung betrifft ein Verfahren zur Kurzweg-Destillation von Produkten, vorzugsweise Erdölprodukten, im Vakuum, bei dem das Produkt mit Hilfe einer Produkteinspeisung derart auf Verdampfungsflächen aufgebracht wird, daß es in Form eines Films turbulent oder quasi-turbulent abfließt und dabei teilweise verdampft, daß das Produkt mit einer solchen Temperatur auf die Verdampfungsflächen aufgebracht wird, daß die zur Verdampfung notwendige Energie dem noch nicht verdampften, sich dabei abkühlenden Produktanteil entnommen wird, daß der entstandene Dampf auf in kleinem Abstand von den Verdampfungsflächen angeordneten Kondensationsflächen niederschlägt und daß der nicht verdampfte Produktanteil über eine Rückstandsabnahme und der kondensierte Anteil über einen Destillatablauf abgezogen werden. Außerdem betrifft die Erfindung eine für die Durchführung dieses Verfahrens geeignete Vorrichtung. Aus der US-A-2 514 944 sind ein Verfahren und eine Vorrichtung dieser Art bekannt.

Aus der US-A-3 434 935 ist es bekannt, daß bei der Kurzweg-Destillation das Blasensieden auf den Verdampfungsflächen unbedingt zu vermeiden ist, da infolge des Zerplatzens der Blasen unerwünschte Produktanteile auf die in unmittelbarer Nähe befindlichen Kondensationsflächen gelangen können und damit das Destillat verunreinigen. Der Betrieb der aus der US-A-2 514 944 bekannten Einrichtung ist deshalb unter Vermeidung des Blasensiedens nur dann möglich, wenn die Speisetemperatur des Produktes so niedrig gewählt wird, daß die Gefahr des Spritzens nicht mehr besteht. Eine niedrige Speisetemperatur hat aber bei einem Destillationsverfahren, bei dem die zur Verdampfung notwendige Energie aus dem Produkt selbst entnommen wird, den Nachteil, daß nur sehr geringe Produktanteile verdampfen und damit die Destillationsausbeute klein ist.

Offensichtlich hat sich aus diesen Gründen die Vakuum-Kurzweg-Destillation bei der Erdölraffinerie bisher noch nicht durchsetzen können, obwohl gerade die Kurzweg-Destillation dazu geeignet ist, die noch nutzbaren, z. B. crackbaren Anteile des Erdöls in hohem Maße zu gewinnen und den Rückstandsanteil zu reduzieren.

Der vorliegenden Erfindung liegt die Aufgabe zugrunde, ein Verfahren der eingangs genannten Art sowie eine für die Durchführung dieses Verfahrens geeignete Vorrichtung vorzuschlagen, welche ohne die Gefahr des Blasensiedens wesentlich höhere Ausbeuten zulassen.

Erfindungsgemäß wird diese Aufgabe dadurch gelöst, daß der Verdampfungsdruck vom Bereich der Produkteinspeisung bis zum Bereich der Rückstandsabnahme gleichsinnig abnimmt, daß die Verdampfungsdruckwerte zwischen 10 und 0,1 mbar liegen und daß die Temperatur der Kondensationsflächen im Bereich der Rückstandsabnahme niedriger ist als im Bereich der Produkteinspeisung. Durch diese Maßnahmen wird eine hohe Verdampfungsleistung bei gleichzeitiger Vermeidung eines schädlichen Blasensiedens erreicht. Zur Erzielung der hohen Verdampfungsleistung wird die durch die Produktabkühlung entstehende Temperaturdifferenz zwischen Produktaufgabe und Produktabnahme möglichst groß gewählt. Das bedeutet zunächst: hohe Produktaufgabe-Temperatur und — infolge des noch hohen Gehaltes an Verdampfbarem — hoher Produktdampfdruck am Eintritt. Das bedeutet aber auch niedrige Produktabnahme-Temperatur und — in folge des niedrigen Gehaltes an Verdampfbarem — niedriger Produktdampfdruck am Austritt. Ein wesentlicher, der Erfindung zugrundeliegender Gedanke ist, dieses Druckverhältnis — im Gegensatz zum Stand der Technik — beizubehalten bzw. aufrechtzuerhalten. Ein relativ hoher Druck im Bereich der Produkteinspeisung verhindert ein allzu stürmisches Verdampfen der leichtersiedenden Anteile und damit das Blasensieden und die dadurch bewirkten Verunreinigungen des Destillates durch Spritzer.

Relativ niedriger Druck im Bereich des Austritts sind für ein gutes Ausdestillieren von besonderer Bedeutung. Nach weiteren Merkmalen der Erfindung kann diese Druckverteilung durch entsprechend abgestufte Kondensationstemperaturen und/oder durch geeignete Ausbildung der Dampfquerschnitte und Absaugstellen erreicht werden.

Besonders vorteilhaft ist die Anwendung des erfindungsgemäßen Verfahrens bzw. der Einsatz eines erfindungsgemäß gestalteten Kurzweg-Destillationsapparates bei der Erdöldestillation, und zwar als sich an die übliche Destillation unter Vakuum anschließender Destillationsschritt. Bei der Erdöldestillation hat der Rückstand aus der normalen Destillation bereits eine ausreichend hohe Temperatur (ca. 360° C), so daß der sich anschließende, erfindungsgemäße Kurzweg-Destillationsschritt ohne jede weitere Energiezufuhr durchgeführt werden kann. Erdöl hat eine relativ kleine spezifische Verdampfungswärme und eine relativ große Enthalpie, wie das bei vielen hochmolekularen Stoffen der Fall ist. Bei Erdöl können z. B. 50% des Speiseproduktes aus der Enthalpie der Flüssigkeit verdampft werden, wenn die Eingangstemperatur um 60 K gegenüber der Rückstandsablauf-Temperatur erhöht wird.

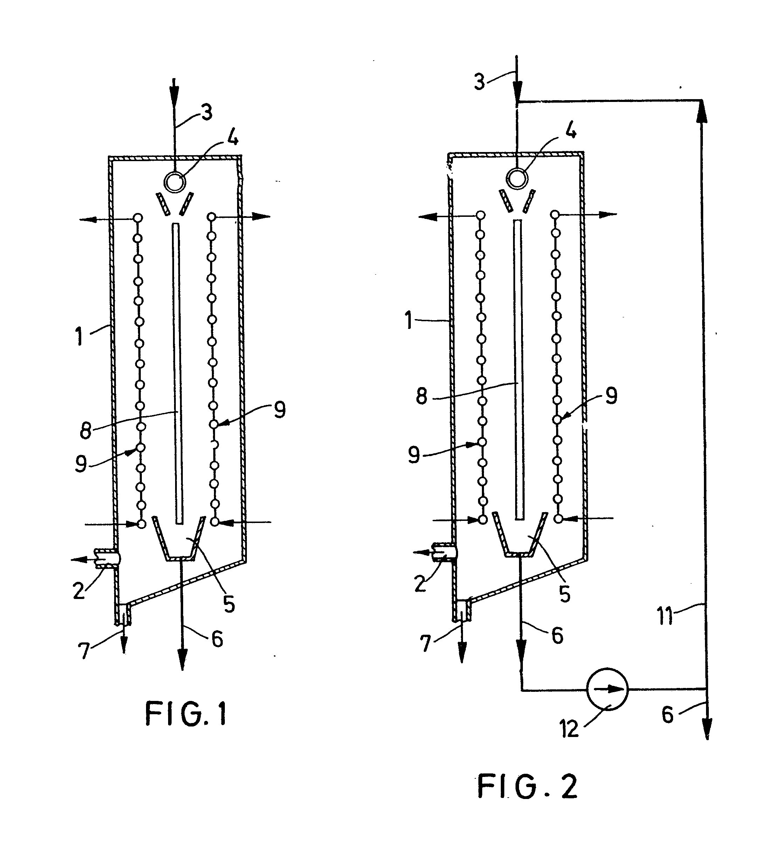

Weitere Vorteile und Einzelheiten der Erfindung sollen anhand von in den Fig. 1 bis 5 schematisch dargestellen Ausführungsbeispielen erläutert werden.

In allen Figuren sind der Vakuumbehälter mit 1, ein Anschlußstutzen für eine Evakuierungseinrichtung mit 2, eine Speiseleitung mit 3, eine Einrichtung zur Verteilung des Produktes auf die Verdampfungsflächen mit 4, ein Rückstandssammler mit 5, eine Rückstandsablaufleitung mit 6 und ein Destillatablauf mit 7 bezeichnet.

Beim Ausführungsbeispiel nach Fig. 1 bildet eine einfache Ablauf- bzw. Rieselplatte 8 die Verdampfungsflächen. In geringem Abstand davor sind Kondensationsflächen 9 angeordnet. Diese bestehen aus jeweils einer Rohrschlange, die von unten nach oben vom Kühlmittel durchströmt ist. Dadurch ergibt sich eine Temperaturabnahme der Kondensationsflächen 9 von oben nach unten, also von der Produkteinspeisung bis zum Ablauf, die der ebenfalls in diesem Sinne verlaufenden Temperaturabnahme des Speiseproduktes entspricht.

Der Aufbau der Destillationseinrichtung nach Fig. 2 unterscheidet sich nicht vom Aufbau nach Fig. 1. Im Unterschied zur Fig. 1 ist jedoch dafür gesorgt, daß das Produkt mehrfach auf die Verdampfungsflächen aufgebracht wird. Dazu ist die Zirkulationsleitung 11 mit der Förderpumpe 12 vorgesehen. In diese Zirkulationsleitung 11 mündet die Speiseleitung 3. Auch die Rückstandsablaufleitung 6 ist teilweise über die Zirkulationsleitung 11 geführt, so daß Speisung und Rückstands-Abnahme im Teilstrom erfolgen.

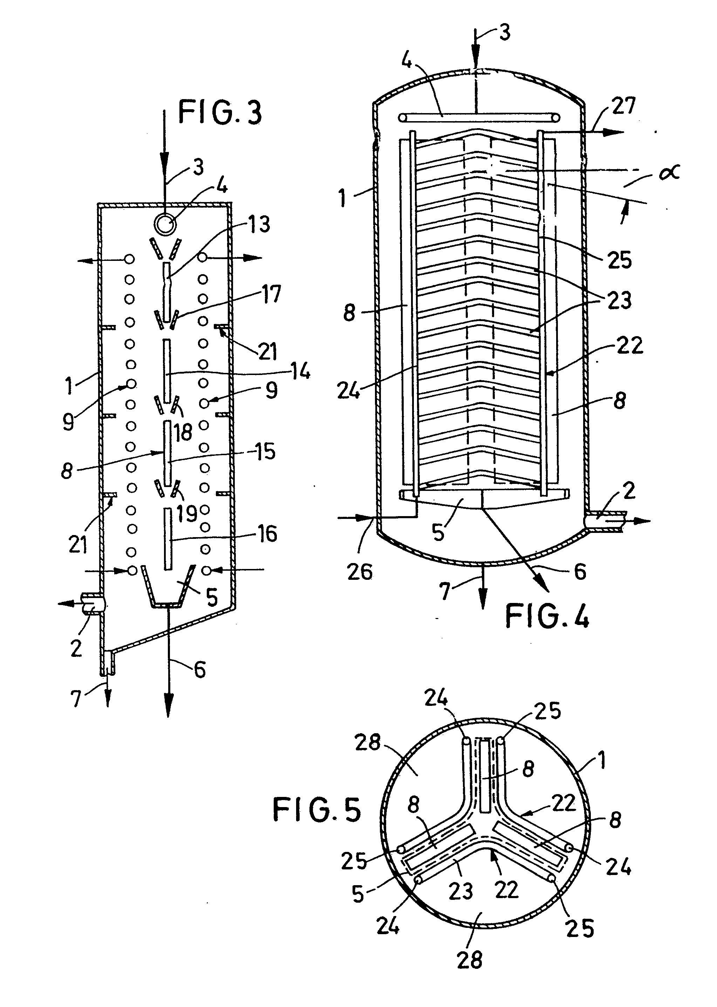

Beim Ausführungsbeispiel nach Fig. 3 werden die Verdampfungsflächen 8 von vier untereinander angeordneten Ablaufplatten 13 bis 16 gebildet, zwischen denen jeweils mittels einer Rinne 17, 18 und 19 das Produkt von den Verdampfungsflächen abgenommen und der jeweils darunterliegenden Ablaufplatte wieder zugeführt wird. Dadurch wird eine Verbesserung der Gleichmäßigkeit der Produktverteilung (Film) des ablaufenden Speiseproduktes erzielt. Darüber hinaus sind an der Innenwand des Behälters 1 Drosselelemente 21 vorgesehen, die von nach innen ragenden Blechabschnitten gebildet werden. Dadurch entstehen zwischen den Kondensatoren 9 und den Drosselelementen 21 Drosselstellen, so daß sich mehrere Destillationsstufen mit unterschiedlichen, nach unten abnehmenden Drücken bilden. Anstelle der oder zusätzlich zu den Drosselelementen 21 können mehrere Anschlußstutzen für Vakuumpumpen mit unterschiedlichem Saugvermögen vorgesehen sein. Zusätzlich können auch die die Kondensationsflächen bildenden Rohre gruppenweise mit einem Kühlmedium geeigneter Temperatur versorgt sein.

Bei den Ausführungen nach den Fig. 1 bis 3 ist jeweils nur eine Ablaufplatte 8 im Vakuumgefäß 1 untergebracht. Es können natürlich auch (nicht dargestellt) mehrere Platten 8 parallel zueinander mit jeweils dazwischen angeordneten Kondensationsflächen im Vakuumgefäß 1 untergebracht sein, um die insgesamt zur Verfügung stehenden Verdampfungsflächen drastisch zu vergrößern.

Eine andere Möglichkeit der Vergrößerung der Verdampfungsflächen ist beim Ausführungsbeispiel nach den Fig. 4 und 5 verwirklicht. Insgesamt sind drei Ablaufplatten 8 sternförmig im im Querschnitt (Fig. 5) runden Vakuumgefäß 1 untergebracht. Die Verteilereinrichtung 4 und der Rückstandssammler 5 sind dieser Anordnung der Ablaufplatten angepaßt. Der Übersichtlichkeit wegen sind nur drei Ablaufplatten 8 dargestellt. Bei einer optimalen Ausnutzung des Innenraumes des Vakuumgefäßes 1 können natürlich wesentlich mehr Ablaufplatten (z. B. zwölf) sternförmig darin untergebracht sein.

Bei sternförmiger Anordnung der Ablaufplatten 8 sind die Kondensationsflächen 22 zweckmäßigerweise V-förmig gestaltet, so daß jede Flanke eines V-förmig gestalteten Kondensationselementes einer der beiden Seiten der Ablaufplatten 8 gegenüberliegt. Die einzelnen Kondensatorelemente bestehen aus V-förmig gestalteten Rohrabschnitten 23, denen im Bereich ihrer offenen Enden jeweils ein vertikal angeordnetes Verteilerrohr 24 bzw. Sammlerrohr 25 zugeordnet ist. Durch entsprechende Wahl des Zulaufs 26 (unten) und des Ablaufs 27 (oben) wird wieder erreicht, daß die Temperatur der Kondensationsflächen von oben nach unten abnimmt. Die verbleibenden Raumabschnitte 28 bilden im wesentlichen dreieckige Kanäle zur Sammlung und Ableitung der nicht kondensierten Restgase.

Ein weiteres zweckmäßiges Merkmal, nämlich eine Neigung der Flanken der V-förmig gestalteten Rohrabschnitte 23 nach unten, und zwar mit einem Winkel $\alpha$ von 3 bis 75°, vorzugsweise 5 bis 20°, ist der Fig. 4 entnehmbar. Dadurch wird erreicht, daß das Destillat zur Seite hin abströmt, wo es in Ableitkanälen (nicht gesondert dargestellt) gesammelt wird. Dadurch wird die Bildung dicker Destillat-Filme auf den Kondensationsflächen und der sich dadurch verschlechternde Wärmeübergang bei besonders hohen Kondensationsflächen vermieden.

In allen Figuren sind die Verdampfungsflächen schematisch als Platten dargestellt. Sie können jedoch zweckmäßigerweise Durchbrüche oder Führungen zur Durchmischung und/oder gleichmäßigen Verteilung des Produktfilms aufweisen. Dazu können die Verdampfungsflächen auch maschenförmig gestaltet sein und z. B. aus Streckmetall bestehen. Wesentlich ist, daß der Produktfilm turbulent oder quasi-turbulent strömen soll.

Bei der Durchführung des erfindungsgemäßen Destillationsverfahrens in den beschriebenen Vorrichtungen muß der Verdampfungsdruck im Vakuumgefäß 1 insgesamt relativ niedrig gehalten werden. Zweckmäßigerweise liegt er im Bereich von 50 bis 0,01 mbar, vorzugsweise 10 bis 0,1 mbar. Dadurch wird erreicht, daß noch vorhandene Destillatfraktionen mit großer Ausbeute gewonnen werden können. Gleichzeitig hat das niedrige Druckniveau den Vorteil, daß die Filmverdampfung ohne Blasensieden, d. h., ohne die Gefahr des Spritzens, abläuft. Sollte es aus verfahrenstechnischen Gründen erforderlich sein, am oberen Ende des Druckbereichs zu arbeiten, dann ist es zweckmäßig, zumindest abschnittsweise Spritzschutzelemente vorzusehen.

**Patentansprüche**

1. Verfahren zur Kurzweg-Destillation von Produkten, vorzugsweise Erdölprodukten, im Vakuum, bei dem das Produkt mit Hilfe einer Produkteinspeisung derart auf Verdampfungsflächen aufgebracht wird, daß es in Form eines Films turbulent oder quasi-turbulent abfließt und dabei teilweise verdampft, daß das Produkt mit einer solchen Temperatur auf die Verdampfungsflächen aufgebracht wird, daß die zur Verdampfung notwendige Energie dem noch nicht verdampften, sich dabei abkühlenden Produktanteil entnommen wird, daß der entstandene Dampf auf in kleinem Abstand von den Verdampfungsflächen angeordneten Kondensationsflächen niederschlägt und daß der nicht verdampfte Produktanteil über eine Rückstandsabnahme und der kondensierte Anteil über einen Destillationsablauf abgezogen werden, dadurch gekennzeichnet, daß der Verdampfungsdruck vom Bereich der Produkteinspeisung bis zum Bereich der Rückstandsabnahme gleichsinnig abnimmt, daß die Verdampfungsdruckwerte zwischen 10 und 0,1 mbar liegen und daß die Temperatur der Kondensationsflächen im Bereich der Rückstandsabnahme niedriger ist als im Bereich der Produkteinspeisung.

2. Verfahren nach Anspruch 1, dadurch gekennzeichnet, daß das Produkt mehrfach über die Verdampfungsflächen zirkuliert, wobei Speisung und Rückstandsabnahme im Teilstrom erfolgen.

3. Verfahren nach Anspruch 1 oder 2, dadurch gekennzeichnet, daß die Destillation mehrstufig durchgeführt wird.

4. Verfahren nach Anspruch 3, dadurch gekennzeichnet, daß eine im Bereich der Rückstandsabnahme liegende Verdampferfläche fremdbeheizt wird.

5. Verfahren nach Anspruch 4, dadurch gekennzeichnet, daß die fremdbeheizte Verdampferfläche vom Speiseprodukt durchströmt wird.

6. Vorrichtung zur Durchführung des Verfahrens nach einem der vorhergehenden Ansprüche mit zwischen gekühlten Kondensationsflächen angeordneten Verdampfungsflächen, dadurch gekennzeichnet, daß das Vakuumgefäß (1) zur Erzielung der gewünschten Druckverteilung einen sich ändernden Querschnitt aufweist.

7. Vorrichtung zur Durchführung des Verfahrens nach einem der Ansprüche 1 bis 5 mit zwischen gekühlten Kondensationsflächen angeordneten Verdampfungsflächen, dadurch gekennzeichnet, daß zur Erzielung der gewünschten Druckverteilung an der Innenwand des Vakuumgefäßes (1) Drosselelemente (21) vorgesehen sind.

8. Vorrichtung zur Durchführung des Verfahrens nach einem der Ansprüche 1 bis 5, mit zwischen gekühlten Kondensationsflächen angeordneten Verdampfungsflächen, dadurch gekennzeichnet, daß zur Erzielung der gewünschten Druckverteilung unterschiedlich große Pumpanschlüsse oder unterschiedliche Vakuumpumpsätze an verschiedenen Stellen des Vakuumgefäßes vorgesehen bzw. angeschlossen sind.

9. Vorrichtung nach Anspruch 6 bis 8, dadurch gekennzeichnet, daß mehrere Kühlkreisläufe vorgesehen sind.

10. Vorrichtung nach einem der Ansprüche 6 bis 9, dadurch gekennzeichnet, daß mehrere übereinander angeordnete, die Verdampfungsflächen bildende Platten (13 bis 16) vorgesehen sind.

11. Vorrichtung nach einem der Ansprüche 6 bis 10, dadurch gekennzeichnet, daß die die Verdampfungsflächen bildenden Platten (8) mit Durchbrüchen und/oder -führungen zur Produktverteilung versehen sind.

12. Vorrichtung nach einem der Ansprüche 6 bis 10, dadurch gekennzeichnet, daß die plattenförmigen Verdampfungsflächen (8) mit einer Vielzahl von Durchbrüchen, z. B. nach Art eines Streckmetall-Abschnittes, gestaltet sind.

13. Vorrichtung nach einem der Ansprüche 6 bis 12, dadurch gekennzeichnet, daß mehrere die Verdampfungsflächen bildende Platten (8) vorgesehen sind.

14. Vorrichtung nach Anspruch 13, dadurch gekennzeichnet, daß die die Verdampfungsflächen bildenden Platten (8) sternförmig in einem zylindrischen Vakuumgefäß (1) angeordnet sind.

15. Vorrichtung nach Anspruch 14, dadurch gekennzeichnet, daß den sternförmig angeordneten Verdampfungsflächen V-förmig ausgebildete Kondensationselemente zugeordnet sind.

16. Vorrichtung nach Anspruch 15, dadurch gekennzeichnet, daß Kondensationselemente nach außen hin geneigte Rippen oder dergleichen aufweisen.

17. Vorrichtung nach Anspruch 16, dadurch gekennzeichnet, daß die Kondensationsflächen von V-förmig gestalteten Kanal- oder Rohrabschnitten gebildet werden.

18. Vorrichtung nach einem der Ansprüche 15 bis 17, dadurch gekennzeichnet, daß den V-förmig gestalteten Kondensationselementen an ihren freien Enden Verteilerrohre bzw. Sammlerrohre zugeordnet sind.

19. Vorrichtung nach einem der Ansprüche 14 bis 18, dadurch gekennzeichnet, daß die V-förmig gestalteten Elemente nach außen hin geneigt angeordnet sind, und zwar mit einem Winkel $\alpha$ zur Horizontalen von 5 bis 75°, vorzugsweise 5 bis 20°.

**Claims**

1. A method for the short-path distillation of products, particularly of petroleum products, in vacuum, wherein the product is applied to vaporization surfaces with the help of a product feed in such manner that it flows away in a turbulent or quasi-turbulent manner in the form of a film and partly vaporizes by so doing, that the product is applied to the vaporization surfaces at such a temperature that the energy necessary for vaporization is removed from the cooled but not yet vaporized proportion of the product, that the resultant vapour is deposited on condensation surfaces arranged at a short distance from the vaporization surfaces, and the unvaporized portion of the product ist drawn off by removal of a residue and the condensed proportion by way of a distillation cycle, characterized in that the vaporization pressure diminishes in synchronism from the zone of the product feed to the zone of residue removal, in that the vaporization pressures lie between 10 and 0.1 mbars, and in that the temperature of the condensation surfaces in the zone of residue removal is lower than in the zone of product feed.

2. A method according to claim 1, characterized in that the product is circulated several times across the vaporization surfaces, feed and residue removal occurring on a partial-flow basis.

3. A method according to claim 1 or 2, characterized in that distillation is carried out on a multi-stage basis.

4. A method according to claim 3, characterized in that a vaporizer surface disposed in the zone of residue removal is heated externally.

5. A method according to claim 4, characterized in that the feed product flow through the externally-heated vaporizer surface.

6. Apparatus for carrying out the method according to any one of the preceding claims, with vaporizing surfaces arranged between cooled condensation surfaces, characterized in that the vacuum vessel (1) has a changing cross-section for achieving the required pressure distribution.

7. Apparatus for carrying out the method according to any one of claims 1 to 5, with vaporizing surfaces arranged between two cooled condensation surfaces, characterized in that throttle elemente (21) are provided for achieving the required pressure distribution on the inner wall of the vacuum vessel (1).

8. Apparatus for carrying out the method according to any one of claims 1 to 5, with vaporizing surfaces arranged between condensation surfaces, characterized in that for the purpose of achieving the required pressure distribution, pump connections of different sizes or differing vacuum pump units are provided or connected at various points of the vacuum vessel.

9. Apparatus according to claims 6 to 8, characterized in that a plurality of cooling circuits are provided.

10. Apparatus according to any one of claims 6 to 9, characterized in that a plurality of superposed plates (13 to 16) forming the vaporizing surfaces are provided.

11. Apparatus according to any one of claims 6 to 10, characterized in that the plates (8) forming the vaporizing surfaces are provided with orifices and/or guide means for distributing the product.

12. Apparatus according to any one of claims 6 to 10, characterized in that the platelike vaporizing surfaces (8) are formed by a large number of orifices, e. g. in the manner of an expanded-metal part.

13. Apparatus according to any one of claims 6 to 12, characterized in that a plurality of plates (8) forming the vaporizing surfaces are provided.

14. Apparatus according to claim 13, characterized in that the plates (8) forming the vaporizing surfaces are arranged in a star formation in a cylindrical vacuum vessel (1).

15. Apparatus according to claim 14, characterized in that V-shaped condensation elements are associated with the vaporizing surfaces arranged in the form of a star.

16. Apparatus according to claim 15, characterized in that the condensation elements have outwardly inclined fins or the like.

17. Apparatus according to claim 16, characterized in that the condensation surfaces are formed by V-shaped duct or pipe portions.

18. Apparatus according to any one of claims 15 to 17, characterized in that distributor pipes or collector pipes are associated with the V-shaped condensation elements at the free ends thereof.

19. Apparatus according to any one of claims 14 to 18, characterized in that the V-shaped elements are outwardly inclined at an angle $\alpha$ of 5 to 75°, and preferably 5 to 20° to the horizontal.

## Revendications

1. — Procédé de distillation à trajet court de produits, de préférence de produits pétroliers, sous vide, dans lequel le produit est déposé, à l'aide d'un dispositif d'introduction du produit, sur des surfaces de vaporisation dans un mode dans lequel il s'écoule en écoulement turbulent ou quasi turbulent sous la forme d'un film et se vaporise alors partiellement, le produit est déposé sur les surfaces de vaporisation à une température telle que l'énergie nécessaire pour la vaporisation soit prélevée sur la fraction qui n'est pas encore vaporisée du produit, et qui se refroidit dans ce processus, la vapeur dégagée se condense sur des surfaces de condensation disposées à petite distance des surfaces de vaporisation et la fraction non vaporisée du produit est évacuée par une sortie de résidu et la fraction condensée par un écoulement de distillat, caractérisé en ce que la pression de vaporisation décroît dans le même sens depuis la région d'introduction du produit jusqu'à la région de l'évacuation du résidu, en ce que les valeurs de pression de vaporisation sont situées entre 10 et 0,1 mbar et en ce que la température des surfaces de condensation est plus basse dans la région de l'évacuation du résidu que dans la région de l'introduction du produit.

2. — Procédé selon la revendication 1, caractérisé en ce que le produit circule plusieurs fois sur les surfaces de vaporisation, l'alimentation et l'évacuation du résidu se produisant en courants partiels.

3. — Procédé selon la revendication 1 ou 2, caractérisé en ce que la distillation est réalisée en plusieurs étages.

4. — Procédé selon la revendication 3, caractérisé en ce qu'une surface de vaporisation située dans la région de l'évacuation du résidu est chauffée par un apport de chaleur extérieur.

5. — Procédé selon la revendication 4, caractérisé en ce que la surface de vaporisation chauffée par un apport de chaleur extérieur est parcourue par le produit introduit.

6. — Dispositif pour la mise en oeuvre du procédé selon l'une des revendications précédentes, comprenant des surfaces de vaporisation disposées entre des surfaces de condensation refroidies, caractérisé en ce que l'enceinte à vide (1) présente une section variable pour obtenir la répartition de pression désirée.

7. — Dispositif pour la mise en oeuvre du procédé selon l'une des revendications 1 à 5, comprenant des surfaces de vaporisation disposées entre des surfaces de condensation refroidies, caractérisé en ce que, pour obtenir la répartition de pression désirée, il est prévu des éléments d'étranglement (21) sur la paroi intérieure de l'enceinte à vide (1).

8. — Dispositif pour la mise en oeuvre du procédé selon l'une des revendications 1 à 5, comprenant des surfaces de vaporisation disposées entre les surfaces de condensation refroidies, caractérisé en ce que, pour obtenir la répartition de pression désirée, des raccords de pompes de différentes dimensions ou des groupes de pompes à vide différents sont prévus ou raccordés à différents endroits de l'enceinte à vide.

9. — Dispositif selon les revendications 6 à 8, caractérisé en ce qu'il est prévu plusieurs circuits de refroidissement.

10. — Dispositif selon l'une des revendications 6 à 9, caractérisé en ce qu'il est prévu plusieurs plaques (13 à 16) disposées l'une au-dessus de l'autre, qui forment les surfaces de vaporisation.

11. — Dispositif selon l'une des revendications 6 à 10, caractérisé en ce que les plaques (8) qui forment les surfaces de vaporisation sont munies d'ouvertures et/ou de guides pour la répartition du produit.

12. — Dispositif selon l'une des revendications 6 à 10, caractérisé en ce que les surfaces de vaporisation (8) en forme de plaques présentent un grand nombre d'ouvertures, par exemple, à la façon d'un morceau de tôle déployé.

13. — Dispositif selon l'une des revendications 6 à 12, caractérisé en ce qu'il est prévu plusieurs plaques (8) qui forment les surfaces de vaporisation.

14. — Dispositif selon la revendication 13, caractérisé en ce que les plaques (8) qui forment les surfaces de vaporisation sont disposées en étoile dans une enceinte à vide cylindrique (1).

15. — Dispositif selon la revendication 14, caractérisé en ce qu'aux surfaces de vaporisation disposées en étoile sont associés des éléments de condensation en forme de V.

16. — Dispositif selon la revendication 15, caractérisé en ce que les éléments de condensation présentent des nervures ou éléments équivalents inclinés vers l'intérieur.

17. — Dispositif selon la revendication 16, caractérisé en ce que les surfaces de condensation sont formées par des longueurs de canaux ou de tubes présentant une forme en V.

18. — Dispositif selon les revendications 15 à 17, caractérisé en ce qu'aux éléments de condensation à configuration en V, sont associés des tubes distributeurs ou collecteurs agencés à leurs extrémités libres.

19. — Dispositif selon l'une des revendications 14 à 18, caractérisé en ce que les éléments à configuration en V sont disposés inclinés vers l'extérieur et, à savoir, inclinés sur l'horizontale d'un angle $\alpha$ de 5 à 75°, de préférence de 5 à 20°.

FIG. 1

FIG. 2

FIG.3

FIG.4

FIG.5